# EUROPEAN PATENT SPECIFICATION

(11) **EP 3 499 780 B1**
(45) Date of publication and mention of the grant of the patent: **22.09.2021**
(21) Application number: 17838771.8
(22) Date of filing: 10.08.2017
(51) Int. Cl.: H04L 5/00, H04W 72/00, H04W 72/08

(54) **SERVICE PROCESSING METHOD AND DEVICE**
DIENSTVERARBEITUNGSVERFAHREN UND -VORRICHTUNG
PROCÉDÉ ET DISPOSITIF DE TRAITEMENT DE SERVICE

(30) Priority: 12.08.2016 CN 201610670091
(43) Date of publication of application: 19.06.2019
(73) Proprietor: ZTE Corporation, Shenzhen, Guangdong 518057 (CN)
(72) Inventor: XU, Hanqing, Shenzhen Guangdong 518057 (CN); ZHAO, Yajun, Shenzhen Guangdong 518057 (CN); LI, Xincai, Shenzhen Guangdong 518057 (CN); YANG, Ling, Shenzhen Guangdong 518057 (CN)
(74) Representative: Aipex B.V.
(86) International application number: PCT/CN2017/096868
(87) International publication number: WO 2018/028641

(56) References cited:
- CN-A- 102 215 493
- CN-A- 102 752 864
- CN-A- 103 402 261
- CN-A- 104 780 542
- US-A1- 2015 063 240
- INTERDIGITAL COMMUNICATIONS: "Outer erasure code for efficient multiplexing", 3GPP DRAFT; R1-164667, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096360, Retrieved from the Internet: URL:http://www.3gpp.org/ftp/tsg_ran/WG1_RL 1/TSGR1_85/Docs/ [retrieved on 2016-05-14]
- INTERDIGITAL COMMUNICATIONS: "Flexible framework for New Radio", 3GPP DRAFT; R1-162577, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080266, Retrieved from the Internet: URL:http://www.3gpp.org/ftp/tsg_ran/WG1_RL 1/TSGR1_84b/Docs/ [retrieved on 2016-04-02]
- CATT: "NR Frame Structure Design", 3GPP DRAFT; R1-164248, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051090038, Retrieved from the Internet: URL:http://www.3gpp.org/ftp/tsg_ran/WG1_RL 1/TSGR1_85/Docs/ [retrieved on 2016-05-14]
- LG ELECTRONICS ET AL.: 'Ways Forward on Flexible/Full Duplex Operation in NR and LTE' 3GPPTSG RAN, RP-160797 16 June 2016, XP051103645
- HUAWEI ET AL.: 'Discussion on 5G Scenarios and Requirements' 3GPP TSG-RAN A HOC, RPA160043 29 January 2016, XP051053241
- LG ELECTRONICS: 'Discussion on Deployment Scenarios and Requirements for Next Generation Access Technologies' 3GPP TSG-RAN AD HOC, RPA160058 29 January 2016, XP051053257

## Description

### TECHNICAL FIELD

The invention relates to wireless communication technologies, in particular, to a traffic processing method and computer-readable storage medium storing computer-executable instructions for executing the method.

### BACKGROUND

In the past few decades, mobile communications has experienced a leap from voice services to high-speed broadband data services. With the further development of new services such as the mobile Internet and the Internet of Things, new demands for mobile networks will further increase. In one aspect, it is expected that the mobile network data traffic will explode in the future. In another aspect, the connection of massive devices and diverse services and applications are one of the key features of future wireless communication systems. Human-centered communications and machine-centered communications will coexist and develop together.

Due to the diverse services and application requirements of future mobile communications, wireless communication systems must meet diverse requirements, including requirements for throughput, latency, reliability, link density, cost, power consumption, complexity, and coverage. Therefore, research on the 5th generation (5G) system comes into being. At the beginning of the research of 5G, possible application scenarios or traffics of the future mobile communications may be classified into three categories: enhanced mobile broadband (eMBB), Ultra Reliable Low latency Communication (URLLC), and machine type communication (mMTC). eMBB, URLLC and mMTC are three different traffics, and have different transmission requirements. The eMBB traffic generally needs broadband transmissions and requires high throughput; the URLLC traffic has requirements for reliability and latency; and the mMTC traffic requires large connections, wide coverage and low power consumption.

Due to the different requirements of the above types of traffics, it is determined that requirements of the above traffics for occupying time domain and frequency domain are different when the traffics are transmitted. Currently, no related solution has been proposed to solve the problem of how to support the transmissions of different traffics with different requirement characteristics in the same frequency band (and/or at the same time, such as a subframe, or a frame, or a symbol). Further relevant technologies are also known from INTERDIGITAL COMMUNICATIONS: "Outer erasure code for efficient multiplexing", 3GPP DRAFT; R1-164667, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Nanjing, China; 20160523-20160527 14 May 2016 (2016-05-14), XP051096360, INTERDIGITAL COMMUNICATIONS: "Flexible framework for New Radio", 3GPP DRAFT; R1-162577, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Busan, Korea; 20160411-20160415 2 April 2016 (2016-04-02), XP051080266, CATT: "NR Frame Structure Design", 3GPP DRAFT; R1-164248, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Nanjing, China; 20160523-20160527 14 May 2016 (2016-05-14), XP051090038, LG ELECTRONICS ET AL .: "Ways Forward on Flexible/Full Duplex Operation in NR and LTE", 3GPPTSG RAN, RP-160797, 16 June 2016 (2016-06-16), XP051103645.

### SUMMARY

The following is a summary of the subject matter described herein in detail. This summary is not intended to limit the scope of the claims. The invention is set out in the appended set of claims.

Embodiments of the present invention provide a traffic processing method and computer-readable storage medium as defined in the attached independent claims capable of supporting the transmissions of different traffics in the same frequency band. Further improvements are provided in the dependent claims.

In the embodiments of the present invention, the sending end processes traffic data in the corresponding time-frequency resource according to the preset traffic type pattern, where the service data is a channel or a signal. By means of the technical solution, the problem of how to transmit multiple types of traffics with different characteristics in the same frequency band is solved, and the transmission of different traffics in the same frequency band is supported. Further, the collision problem and the latency problem between different types of traffics are reduced.

Furthermore, in the embodiments of the present invention, by listening to the unlicensed carrier and correspondingly processing the unlicensed carrier, the problem how to detect the busy/idle state of the carrier under the condition of unlicensed carrier and the multiple types of traffics with different characteristics, thereby further improving the performance of the wireless communication system.

Additional features and advantages of the preset invention will be set forth in the description which follows, and in part will be obvious from the description, or may be learned by practice of the present invention. The objects and other advantages of the present invention can be implemented and obtained through the structure especially indicated in the specification, claims and drawings.

Other aspects can be understood after the drawings and detailed description are read and understood.

### BRIEF DESCRIPTION OF DRAWINGS

The drawings are used to provide a further understanding of the technical solutions of the present invention, constitute a part of the specification, explain the technical solutions of the present invention in conjunction with the embodiments of the present application, and do not limit the technical solutions of the present invention.
FIG. 1 is a flowchart of a traffic processing method according to an embodiment of the present invention.
FIG. 2 is a structure diagram of a traffic processing device according to an embodiment of the present invention.

### DETAILED DESCRIPTION

The technical solution of the present invention will be further described in detail with reference to the drawings and embodiments.

It is to be noted that the eMBB traffic, URLLC traffic and mMTC traffic are just typical applications or typical traffics of 5G, but cannot cover all applications and traffics of future wireless communication. The technical solution of the present invention is not limited to the above three types of traffics. Generally, the traffics involved in the present invention may be divided into a first type traffic, and/or a second type traffic, and/or a third type traffic. The characteristic of the first type traffic is generally broadband transmission and the big data packet transmission. The characteristic of the second type traffic is high requirement for latency. The characteristic of the third type traffic is narrowband transmission (such as from tens of kHz to several MHz, which is usually less than or equal to 20 MHz).

In embodiments of the present invention, broadband and narrowband are relative concepts. For example, a system bandwidth set available for the first type traffic is {1.4, 3, 5, 10, 15, 20, 40, 100} MHz, and a system bandwidth set available for the third type traffic is {0.18, 0.36, 1.4, 3, 5, 10} MHz. In a certain scenario, the bandwidth used by the first type traffic is 1.4 MHz, and the bandwidth used by the third type traffic is also 1.4 MHz. In another scenario, the bandwidth used by the first type traffic is 100 MHz, and the bandwidth used by the third type traffic is 0.18 MHz. Above all, the system bandwidth used by the first type traffic may be greater. Therefore, in the embodiments of the present invention, the system bandwidth used by the first type traffic is greater than or equal to the system bandwidth used by the third type traffic, and the system bandwidth used by the first type traffic is referred to as broadband, and the system bandwidth used by the third type traffic is referred to as narrowband.

For ease of description, in the embodiments of the present invention, a typical application of the first type traffic is the eMBB traffic, a typical application of the second type traffic is the URLLC traffic, and a typical application of the third type traffic is the mMTC traffic.

It should be emphasized that in the embodiments of the present invention, the first type traffic to the third type traffic are not limited to the above three typical applications, and may include other similar traffics. For example, the third type traffic may also be an enhanced machine type communication (eMTC) traffic, or a narrowband Internet of Things (NB-IoT) traffic, or a vehicle-to-external (V2X) type traffic. Using the three typical applications to represent the three type traffics is merely for ease of description.

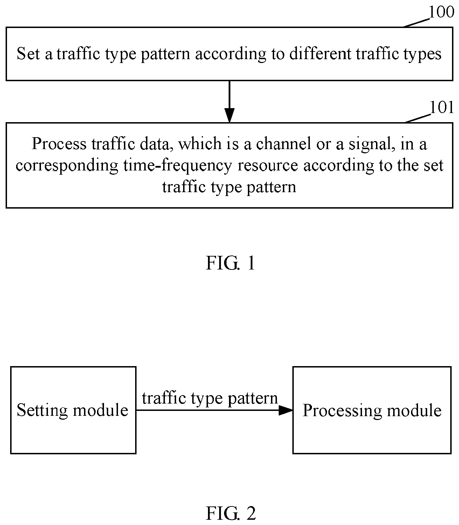

In order to support the transmission of different traffics in the same frequency band, the embodiments of the present invention provides a traffic processing method. The method at least includes that: a sending end processes traffic data in a corresponding time-frequency resource according to a preset traffic type pattern, where the traffic data includes a channel or a signal. As shown in FIG. 1, the method includes the steps described below.

In step 100, a traffic type pattern is configured according to different traffic types.

In step 101, traffic data is processed in a corresponding time-frequency resource according to the configured traffic type pattern, where the traffic data includes a channel or a signal.

The traffic type pattern includes, but is not limited to, any combination of: a first traffic type pattern, a second traffic type pattern, and a third traffic type pattern.

The first traffic type pattern is sent using broadband, and is used for sending the first type traffic;

The second traffic type pattern is used for sending the second type traffic. In a frequency domain, the second traffic type pattern occupies an entire broadband frequency band. In a time domain, the second traffic type pattern occupies one or more symbols, or occupies one or more time slots, or occupies one or more subframes, or occupies one or more frames, or occupies one or more resource unit durations, or occupies one or more time units of a burst duration, or occupies a combined duration of multiple time units, or is not limited in the time domain.

The third service type pattern is used for sending the third type traffic. In the frequency domain, the third service type pattern occupies one or more narrowband frequency bands in the broadband. In the time frequency domain, the third service type pattern occupies one or more symbols, or occupies one or more time slots, or occupies one or more subframes, or occupies one or more frames, or occupies one or more resource unit durations, or occupies one or more time units of a burst duration, or occupies a combined duration of multiple time units, or is not limited in the time domain.

The traffic type pattern is distributed on an entire duration, or is distributed in a pre-configured time unit.

When the traffic type pattern is distributed in the pre-configured time unit, the pre-configured time unit may include: an odd time slot or an odd subframe or an odd frame, and/or an even time slot or an even subframe or an even frame, and/or a first half subframe or a second half subframe, and/or a pre-configured time slot or a pre-configured subframe or a pre-configured frame or a pre-configured burst duration or a pre-configured resource unit. Alternatively, the pre-configured time unit may include a time unit occupied by the traffic type pattern is pre-configured according to one or more of an offset, a period and a duration.

Furthermore, the sending end may send configuration information of the time unit to the receiving end. Specifically, the configuration information of the time unit is sent by a base station to a user equipment (UE). It is to be noted that if the UE is the sending end of the traffic data, the configuration information does not need to be sent to the receiving end(i.e., the base station). For example, if the offset is 0, the period is 100 ms, and the duration is 10 ms, the pre-configured time unit in which the traffic type pattern is distributed may be 0-10 ms, 100-110 ms, or 200-210 ms.

The sending end may be the base station, or may be the UE.

For the unlicensed carrier scenario, the method further includes the step described below.

An energy detection threshold for the broadband bandwidth used by the first traffic type is set to be a first threshold, and an energy detection threshold for a sub-band bandwidth or a narrowband bandwidth is set to be a second threshold.

The sub-bands refer to multiple sub-bands obtained by dividing the broadband bandwidth used by the first traffic type, and each of the sub-bands has a predefined bandwidth. The predefined bandwidths of the sub-bands may be the same or may be different. Alternatively, bandwidths of some of the sub-bands are the same, and bandwidths of another some of the sub-bands are different. For example, the broadband with bandwidth of 20 MHz is divided into 7 sub-bands. The bandwidth of one sub-band is 2 MHz, and the bandwidth of each of the rest 6 sub-bands is 3 MHz. In another example, the broadband with bandwidth of 28 MHz is divided into 8 sub-bands. 6 sub-bands each have a bandwidth of 3 MHz, and both the bandwidth of the first sub-band and the bandwidth of the last sub-band are 1 MHz.

Preferably, the bandwidth of each sub-band is equal to the bandwidth of the narrowband used by the third type traffic. Optionally, a certain sub-band or some sub-bands have the bandwidth equal to the bandwidth of the narrowband used by the third type traffic.

In addition, since the sub-bands may have different bandwidths, the energy detection thresholds for the bandwidths of the sub-bands may not be the same. That is, the second thresholds for the sub-bands may be different. For ease of description, the energy detection threshold for the sub-band is referred to as the second threshold.

The value of the first threshold and the value of the second threshold are related to the bandwidth, transmission power, regulation requirements, signal/channel patterns to be sent, and interfere types. For example, in ETSI technical specification, the threshold is equal to -73 dBm/MHz + (23 dBm - transmisison power)/(1 MHz). Since the bandwidth of the sub-band is generally less than or equal to the bandwidth of the broadband, the second threshold is generally less than or equal to the first threshold.

A device listens to an unlicensed carrier in the broadband used by the first type traffic or the second type traffic to obtain a first energy detection result. The device listens to the unlicensed carrier in the sub-band to obtain a second energy detection result. There are two ways to listen to the unlicensed carrier in the sub-band. The first method is to listen to the unlicensed carrier in all sub-bands, and the second method is to listen to the unlicensed carrier on part of the sub-bands, for example, to listen to the unlicensed carrier on sub-bands corresponding to the narrowband used by the third type traffic.

When the first type traffic or the second type traffic needs to be sent, for the unlicensed carrier scenario, the method further includes the following steps.

The sending end listens to the unlicensed carrier in the bandwidth of the broadband or bandwidth of the sub-band used by the first type traffic or the second type traffic.

In response to determining that the first energy detection result is greater than or equal to the first threshold, it is determined that the unlicensed carrier is busy, and the sending end does not send data of the first type traffic or data of the second type traffic.

In response to determining that the first energy detection result is less than the first threshold, and the second energy detection result is greater than or equal to the second threshold, it is determined that the unlicensed carrier is busy, and the sending end does not send data of the first type traffic and/or data of the second type traffic.

In response to determining that the first energy detection result is less than the first threshold, and the second energy detection result is less than the second threshold, it is determined that the unlicensed carrier is idle, and the sending end sends the data of the first type traffic and/or data of the second type traffic.

When the third type traffic needs to be sent, for the unlicensed carrier scenario, the method further includes the following methods.

### Method 1:

In response to determining that the second energy detection result is greater than or equal to the second threshold, it is determine that the unlicensed carrier is busy, and the sending end does not send the data of the third type traffic.

In response to determining that the second energy detection result is less than the second threshold, it is determine that the unlicensed carrier is idle, and the sending end sends the data of the third type traffic.

Method 2: the adopted sending manner is the same as the manner for sending the first type traffic. That is, only when the first energy detection result is less than the first threshold and the second energy detection result is less than the second threshold, it is determined that the unlicensed carrier is idle, and the sending end sends the data of the first type traffic.

Method 3: in response to determining that the first type traffic or the second type traffic is being sent or to be sent, only the first type traffic or the second type traffic performs unlicensed carrier energy detection.

It is to be noted that the manner of determining the relationship between the first energy detection result/the second energy detection result and the first threshold/the second threshold is determining whether the first energy detection result/the second energy detection result is greater than or equal to the first threshold/the second threshold, or the first energy detection result/the second energy detection result is less than the first threshold/the second threshold. But the protection scope of the present invention is not limited to this. That is, the manner of determining the relationship between the first energy detection result/the second energy detection result and the first threshold/the second threshold may also be determined may be determining whether the first energy detection result/the second energy detection result is greater than the first threshold/the second threshold, or the first energy detection result/the second energy detection result is less than or equal to the first threshold/the second threshold. In the embodiments of the present invention, the manner of determining the relationship between the first energy detection result/the second energy detection result and the first threshold/the second threshold is preferably determining whether the first energy detection result/the second energy detection result is greater than or equal to the first threshold/the second threshold, or the first energy detection result/the second energy detection result is less than the first threshold/the second threshold.

Alternatively, in the unlicensed carrier scenario, when a used system band or a declaration band is broadband, such as 20 MHz, for the case where only the first type traffic such as the eMBB traffic exists, for the case where only the third type traffic such as the narrowband mMTC traffic exists, and for the case where both the first type traffic and the third type traffic exist, the bandwidth of the broadband needs to satisfy the unlicensed carrier regulation requirement, for example, to satisfy the requirement of occupying 80% or more of the system bandwidth.

In another example, the system bandwidth sent by the first type traffic such as the eMBB traffic is the broadband, and the system bandwidth used by the third type traffic such as the mMTC traffic is the narrowband. The first type traffic such as the eMBB traffic satisfies the broadband unlicensed carrier regulation requirement, and the third type traffic such as the mMTC traffic satisfies the narrowband unlicensed carrier regulation requirement. For example, when the first type traffic such as the eMBB traffic does not exist, the third type traffic such as the mMTC traffic only needs to occupy 80% or more of the bandwidth of the narrowband. The unlicensed carrier regulation requirement includes at least one of: an occupied channel bandwidth requirement, an energy detection threshold requirement, and a maximum transmit power spectral density requirement or a power spectral density requirement.

Furthermore, the procedure of processing the traffic data on the corresponding time-frequency resource in the traffic sending method in the present invention includes the following step.

The sending end does not send the data of the first type traffic in a pre-configured time unit or an entire duration, that is, in the time-frequency resource corresponding to the second traffic type pattern and/or the third traffic type pattern where the time unit is not limited..

When the second type traffic or the third type traffic exists, the data of the first type traffic is not sent in the pre-configured time unit or the entire duration, that is, in the time-frequency resource corresponding to the second traffic type pattern and/or the third traffic type pattern where the time unit is not limited. That is, if no second type traffic or third type traffic needs to be sent, the data of the first type traffic may be sent in the corresponding time-frequency resource.

Furthermore, for the receiving end, the receiving end receives traffic data on a corresponding time-frequency resource according to a preset traffic type pattern, where the traffic data includes a channel or a signal. The receiving process specifically includes the following step.

On the time-frequency resource where the traffic type pattern of the second type traffic and/or the traffic type pattern of the third type traffic is located, the data of the first type traffic or other type traffic does not exist throughout, and the receiving end does not demodulate or decode the data of the first type traffic or other type traffic on the time-frequency resource where the traffic type pattern of the second type traffic and/or the traffic type pattern of the third type traffic is located.

When the receiving end receives indication information indicating that the second type traffic and/or the third type traffic exist, the receiving end determines that the time-frequency resource where the traffic type pattern is located is used by the traffic of corresponding traffic type. At this time, the receiving end does not send the data of the first type traffic or other type traffic on the time-frequency resource where the traffic type pattern of the second type traffic and/or the traffic type pattern of the third type traffic is located, and does not demodulate or decode the data of the first type traffic or other type traffic on this time-frequency resource.

When the receiving end fails to receive the indication information indicating the existence of the second type traffic and/or the third type traffic, or when the receiving end receives the indication information indicating that the second type traffic and/or the third type traffic does not exist, the UE does not assume that the data of the first type traffic or other type traffic is not on the time-frequency resource where the traffic type pattern is located. That is, when the first type traffic or other type traffic is sent, the data of the first type traffic or other type traffic needs to be demodulated or decoded in the time-frequency resource.

Alternatively, the indication information includes:
information indicating whether a time-frequency resource is occupied by a traffic and whether the traffic has a traffic type; and/or
traffic type pattern information, including at least one of: information indicating whether a traffic type pattern exists, information indicating the time-frequency resource occupied by the traffic type pattern, and information indicating the type of the traffic type pattern; and/or
a traffic type traffic duration or a duration of the traffic type pattern; and/or
a starting position of the traffic type traffic or a starting position of the traffic type pattern; and/or
an ending position of the traffic type traffic or an ending position of the traffic type pattern; and/or
information of a time unit where the traffic type pattern appears, the time unit including at least one of: a period, an offset and a duration.

Alternatively, the indication information may be sent to the receiving end through one of RRC signaling, UCI, DCI indication, and a channel/a signal.

Alternatively, the channel may be an uplink/downlink control channel, or an uplink/downlink shared channel, or a broadcast channel.

Alternatively, the signal may be a discovery signal, or an initial signal, or an occupancy signal.

Alternatively, the receiving end receiving the indication information at least supports the first type traffic.

The method further includes that: the received indication information is scrambled by using an RNTI corresponding to the traffic type. Other examples are a UE-specific RNTI, or a UE group-specific RNTI.

Alternatively, the step of sending the traffic data on the corresponding time-frequency resource when the traffic type pattern includes the second traffic type pattern includes the following scenarios.

When no other type traffic is being sent, the second type traffic may be sent according to the preset frame format and sending manner. In this case, the mixed transmission in which the second type traffic and other type traffic are transmitted together is not involved.

When the first type traffic such as the eMBB traffic or the third type traffic exists, there are two manners for sending the traffic data. The first manner is that the second type traffic needs to be preferentially sent. For example, when both the first type traffic and the second type traffic need to be sent, the data of the second type traffic is first sent, and the first type traffic is sent after the second type traffic is sent. The second manner is that the data of the second type traffic is dynamically inserted into a burst of the first type traffic or the third type traffic, that is, the second type traffic is transmitted with another type traffic.

Furthermore, in order to facilitate the receiving end to detect other traffics such as the first type traffic and/or the second type traffic, the sending end needs to additionally send one of the indicating signaling, indicating signal and indicating channel to indicate that the second type traffic currently exists. The indicating signaling indicating that the second type traffic currently exists may be sent before the transmission of the URLLC traffic or may be sent at the beginning of the transmission of the URLLC traffic. For example, the signaling may be sent in the control section of the first type traffic, or may be sent in the control section of the second type traffic, or may be sent in the starting one of symbols occupied by the second type traffic, or may be sent in the control section of a subframe. The signal or the channel indicating that the second type traffic exists is generally sent in starting one or more of the symbols occupied by the second type traffic.

In a case where the sending end is the UE, if the UE receives cell-specific or UE group-specific or traffic type-specific second traffic type pattern information and/or third traffic type pattern information from the base station, the UE does not send the uplink data of the first type traffic such as the eMBB traffic on preset patterns.

Alternatively, the traffic type-specific second traffic type pattern information and/or the third traffic type pattern information may be sent to the UE supporting one of the first type traffic, the second type traffic and the third type traffic. These information is specific to a certain traffic type of UE or multiple traffic types of UEs. The meaning of the UE group-specific is that the information is sent to multiple specific UEs in the same group.

Alternatively, if the UE receives cell-specific or UE group-specific or traffic type-specific time unit information from the base station, other UEs or the UE may send the data of the second type traffic and/or third type traffic in these time units. Therefore, the UE does not send the uplink data of the first type traffic in the preset resource of the specific time units. The preset resource is the second traffic type pattern information and/or the third traffic type pattern information.

Alternatively, the traffic type-specific time unit information may be sent to the UE supporting one of the first type traffic, the second type traffic and the third type traffic. The traffic type-specific time unit information is specific to a certain traffic type UE or multiple traffic types UEs. The meaning of the UE group-specific is that the information is sent to multiple specific UEs in the same group.

Furthermore, in order to implement the mixed transmission of multiple type traffics, common resources, dedicated resources and/or the always on resources may be defined in the frame structure/subframe structure and/or the time domain resource/frequency domain resource.

The common resource refers to a part of the frame structure/subframe structure and/or the time domain resource/frequency domain resource where one or more of the following information and signal of the first type traffic, and/or the second type traffic and/or the third type traffic can be sent. The information and signal include: system information, control information, a measurement signal, random access information, paging information and indication information, and the common information for the three types of traffics. Generally speaking, UEs for these traffic types can demodulate or decode the information sent through the common resource, or the UE for a specific traffic type can receive the information sent through the common resource. The indication information of the second type traffic and/or the third type traffic may be sent in the common resource.

The dedicated resource refers to the section used for the transmission of a specific type traffic. For example, the second traffic type pattern and/or the third traffic type pattern is the dedicated resource.

The always on resource generally has a higher priority. Regardless of whether there is the transmission of the first type traffic, and/or the second type traffic, and/or the third type traffic, the always on resource is always used for the transmission of a specific signal/channel, such as the discovery signal. Alternatively, part of information sent through the common resource may be sent through the always on resource.

Furthermore, for the transmission of the first type traffic and/or the second type traffic and/or the third type traffic, the blind detection complexity on the receiving side and the performance of multi-user detection may be reduced in following methods, especially for the grant-free mechanism.

In method 1, time-frequency resources and/or spreading codes available to multiple UEs are grouped, and group information/set information of time-frequency resources and/or spreading codes is notified to the UE through downlink channel/signal, DCI, or RRC signaling.

For example, it is assumed that the spreading code used by UE 1-UE 10 is S 1-S100. In order to prevent multiple UEs from using the same spreading code in the same time-frequency resource to perform data transmission, or to reduce the complexity of multi-user detection, the UE 1-UE 2 may be limited to use the spreading codes S 1-S 20, and the UE 3-UE 4 may be limited to use the spreading codes S 21-S 40, ..., and the UE 9-UE 10 may be limited to use spreading codes S 81-S 100.

The grouping of the time-frequency resources is the same as the grouping of the spreading codes described above.

In method 2, time-frequency resources and/or the spreading codes are grouped in a predefined way, and the UE sends, to the base station sets/group, ,through preambles, numbers of the time-frequency resources and/or the spreading codes randomly used by the UE, thereby reducing the blind detection complexity.

The manner of grouping time-frequency resources/spreading codes used by the UE is similar to the manner described in the method 1, which is easy for those skilled in the art to conceive on the basis of the related description in the method 1, and will not be repeated here.

Alternatively, the preambles may be in the starting section of the uplink frame structure, or in the starting section of the transmission of the frame structure.

FIG. 2 is a structure diagram of a traffic processing device according to an embodiment of the present invention. As shown in FIG. 2, the device includes a setting module and a processing module.

The setting module is configured to set a traffic type pattern according to different traffic types.

The processing module is configured to process traffic data in a corresponding time-frequency resource according to the set traffic type pattern, where the traffic data may be a channel or a signal.

The traffic type pattern includes, but is not limited to, any combination of:
a first traffic type pattern, which is sent using a broadband, and is configured to send a first type traffic;
a second service type pattern, which occupies, in a frequency domain, an entire broadband frequency band, and occupies, in a time domain, one or more symbols, or one or more symbol time slots, or one or more symbol subframes, or one or more symbol frames, or one or more symbol durations or resource unit durations, or one or more time units of a symbol burst duration; or occupies a combined duration of a plurality of time units; or the second traffic type pattern is not limited in the time domain; and
a third service type pattern, which occupies, in a frequency domain, one or more narrowband frequency bands in the broadband and occupies, in a time frequency domain, one or more symbols, or one or more time slots, or one or more subframes, or one or more frames, or one or more resource unit durations, or one or more time units of a burst duration; or occupies a combined duration of a plurality of time units; or the second traffic type pattern is not limited in the time domain.

The traffic type pattern is distributed on the entire duration, or is distributed in a preconfigured time unit.

In an embodiment, the traffic type pattern is distributed in the pre-configured time unit,
the pre-configured time unit may include: an odd time slot or an odd subframe or an odd frame, and/or an even time slot or an even subframe or an even frame, and/or a first half subframe or a second half subframe, and/or a pre-configured time slot or subframe or frame or burst duration or resource unit. Or the pre-configured time unit may include a time unit occupied by the traffic type pattern is pre-configured according to one or more of an offset, a period and a duration.

The traffic processing device in the present invention may be disposed in a base station or a UE, or may be an independent device.

Furthermore, when the traffic processing device where the processing module is located is used as a sending end, the processing module is specifically configured to:
not send the data of the first type traffic on the pre-configured time unit or an entire duration, that is, on the time-frequency resource corresponding to the second traffic type pattern and/or the third traffic type pattern, where the time unit is not limited; or
in response to determining that the second type traffic or the third type traffic exists, not send the data of the first type traffic on the pre-configured time unit or an entire duration, that is, on the time-frequency resource corresponding to the second traffic type pattern and/or the third traffic type pattern, where the time unit is not limited. That is, if no second type traffic or third type traffic needs to be sent, the data of the first type traffic may be sent in the time-frequency resource corresponding to the second traffic type pattern or third traffic type pattern.

Furthermore, when the traffic processing device where the processing module is located is used as a receiving end, the processing module is specifically configured to:
in response to determining that there is no data of the first type traffic or other type traffic on the time-frequency resource where the service traffic pattern of the second type traffic and/or the third type traffic is located, not demodulate or decode the data of the first type traffic or other type traffic on this time-frequency resource; or
in response to receiving indication information for indicating that the second type traffic and/or the third type traffic exist, determine that there is no data of the first type traffic or other type traffic on the time-frequency resource where the traffic type pattern of the second type traffic and/or the traffic type pattern of the third type traffic is located, and not demodulate or decode the data of the first type traffic or other type traffic on this time-frequency resource; or
in response to not receiving the indication information for indicating that the second type traffic and/or the third type traffic exist, or in response to receiving the indication information for indicating that the second type traffic and/or the third type traffic do not exist, in response to determining that the first type traffic or other type traffic is sent, demodulate or decode, as the receiving end, the data of the first type traffic or other type traffic on the time-frequency resource.

Alternatively, the indication information includes:
information indicating whether a time-frequency resource is occupied by a traffic and whether the traffic has a traffic type; and/or
traffic type pattern information, which includes at least one of: information indicating whether a traffic type pattern exists, information indicating the time-frequency resource occupied by the traffic type pattern, and information indicating the type of the traffic type pattern; and/or
a traffic type traffic duration or a duration of the traffic type pattern; and/or
a starting position of the traffic type traffic or a starting position of the traffic type pattern; and/or
an ending position of the traffic type traffic or an ending position of the traffic type pattern; and/or
information of a time unit where the traffic type pattern appears, which includes at least one of: a period, an offset and a duration.

Alternatively, the indication information may be sent to the receiving end through one of RRC signaling, UCI, DCI indication, and the channel/the signal.

Alternatively, the receiving end receiving the indication information at least supports the first type traffic.

The receiving end is further configured to: scramble the received indication information by using an RNTI corresponding to the traffic type. Other examples are a UE-specific RNTI, or a UE group-specific RNTI.

Alternatively, when the traffic type pattern includes the second traffic type pattern, the processing module is specifically configured as follows.

When there is no traffic other than the second type traffic is in transmission, the second type traffic may be sent according to the preset frame format and the preset sending manner. In this case, the mixed transmission of the second type traffic and other type traffic is not involved.

When the first type traffic such as the eMBB traffic or the third type traffic exists, there are two manners for sending the second type traffic. The first manner is that the second type traffic needs to be preferentially sent. For example, when both the first type traffic and the second type traffic need to be sent, the data of the second type traffic is first sent, and the first type traffic is sent after the second type traffic is sent. The second manner is that the data of the second type traffic is sent by dynamically inserting the data of the second type traffic into a burst of the first type traffic or the third type traffic, that is, the mixed transmission of the second type traffic and another type traffic.

Furthermore, when the traffic processing device in the present invention is used as the receiving end, in order to facilitate the receiving end to detect other traffics such as the first type traffic and/or the second type traffic, the sending end needs to additionally send one of an indicating signaling, signal and channel to indicate that the URLLC traffic currently exists. The signaling indicating that the URLLC traffic currently exists may be sent before the transmission of the URLLC traffic or may be sent at the beginning of the transmission of the URLLC traffic. For example, the signaling may be sent in the control section of the eMBB traffic, or may be sent in the control section of the URLLC traffic, or may be sent in the starting symbol occupied by the URLLC traffic, or may be sent in the control section of a subframe. The signal or the channel indicating that the URLLC traffic exists is generally sent in starting one or more symbols occupied by the URLLC traffic.

In an embodiment, the traffic processing device in the present invention is the UE, and the processing module is further configured as follows.

If the UE receives cell-specific or UE group-specific or traffic type-specific second traffic type pattern information and/or third traffic type pattern information from the base station, the UE does not send the uplink data of the first type traffic such as the eMBB traffic on these specific patterns.

In an embodiment, the traffic type-specific second traffic type pattern information and/or the third traffic type pattern information may be sent to the UE supporting one of the first type traffic, the second type traffic and the third type traffic. These information is specific to the UE of a certain traffic type or traffic types. The meaning of the UE group-specific is that the information is sent to multiple specific UEs in the same group.

Alternatively, if the UE receives cell-specific or UE group-specific or traffic type-specific time unit information from the base station, the base station may send the data of the second type traffic and/or third type traffic in these time units. Therefore, the UE does not send the uplink data of the first type traffic on the preset resource of these time units. The preset resource is the second traffic type pattern information and/or the third traffic type pattern information.

In another embodiment, the traffic type-specific time unit information may be sent to the UE supporting one of the first type traffic, the second type traffic and the third type traffic. These traffic type-specific time unit information is specific to UEs of certain traffic type or traffic types. The meaning of the UE group-specific is that the information is sent to multiple specific UEs in the same group.

For the unlicensed carrier scenario, the processing module further configured as follows.

The sending end listens to an unlicensed carrier in the bandwidth of the broadband used by the first type traffic or the second type traffic to obtain a first energy detection result; and/or

The sending end listens to the unlicensed carrier in a sub-band or a narrowband to obtain a second energy detection result.

A first threshold is an energy detection threshold for the broadband used by the first type traffic, and a second threshold is the energy detection threshold for a sub-band or a narrowband bandwidth.

In an embodiment, the first type traffic or the second type traffic needs to be sent, and the processing module is further configured as follows.

In response to determining that the first energy detection result is greater than or equal to the first threshold, the processing module determines that the unlicensed carrier is busy, and does not send the data of the first type traffic or the data of the second type traffic.

In response to determining that the first energy detection result is less than the first threshold, and the second energy detection result is greater than or equal to the second threshold, the processing module determines that the unlicensed carrier is busy, and does not send the data of the first type traffic and/or the data of the second type traffic.

In response to determining that the first energy detection result is less than the first threshold, and the second energy detection result is less than the second threshold, the processing module determines the unlicensed carrier is idle, and sends the data of the first type traffic and/or the data of the second type traffic.

In an embodiment, the third type traffic needs to be sent, and the processing module is further configured as follows:
In response to determining that the second energy detection result is greater than or equal to the second threshold, the processing module determines that the unlicensed carrier is busy, and does not send the data of the third type traffic.

In response to determining that the second energy detection result is less than the second threshold, the processing module determines that the unlicensed carrier is idle, and sends the data of the third type traffic.

In an embodiment, the third type traffic needs to be sent, and the processing module is further configured as follows.

In response to determining that the first energy detection result is greater than or equal to the first threshold, the processing module determines that the unlicensed carrier is busy, and does not send the data of the third type traffic.

In response to determining that the first energy detection result is less than the first threshold, and the second energy detection result is greater than or equal to the second threshold, the processing module determines that the unlicensed carrier is busy, and does not send the data of the third type traffic.

In response to determining that the first energy detection result is less than the first threshold, and the second energy detection result is less than the second threshold, the processing module determines that the unlicensed carrier is idle, and sends the data of the third type traffic.

The bandwidths of the sub-bands are the same or different. Alternatively, bandwidths of some of the sub-bands are the same, and bandwidths of another some of the sub-bands are different.

The bandwidth of each sub-band is equal to a bandwidth used by the third type traffic.

Alternatively, bandwidths of one or some of the sub-bands are the bandwidth used by the third type traffic.

In an embodiment, for the unlicensed carrier scenario, a used system band or a declaration band is broadband, such as 20 MHz, for the case where only the first type traffic such as the eMBB traffic exists, for the case where only the third type traffic such as the narrowband mMTC traffic exists, and for the case where both the first type traffic and the third type traffic exist, the bandwidth of the broadband needs to satisfy the unlicensed carrier regulation requirement, for example, to satisfy the requirement of occupying 80% or more of system bandwidth.

In an alternative embodiment, the system bandwidth sent by the first type traffic such as the eMBB traffic is the broadband, and the system bandwidth used by the third type traffic such as the mMTC traffic is the narrowband. The first type traffic such as the eMBB traffic satisfies the unlicensed carrier regulation requirement for broadband, and the third type traffic such as the mMTC traffic satisfies the unlicensed carrier regulation requirement for narrowband. For example, when the first type traffic such as the eMBB traffic does not exist, the third type traffic such as the mMTC traffic just needs to occupy 80% or more of bandwidth of the narrowband. The unlicensed carrier regulation requirement includes at least one of: an occupied channel bandwidth requirement, an energy detection threshold requirement, and a maximum transmit power spectral density requirement or a power spectral density requirement.

The solution of the present invention will be described below in detail in conjunction with specific embodiments.

A first embodiment uses the mixed transmission of the first type traffic and the third type traffic as an example. This embodiment uses the mixed transmission of the eMBB traffic and the mMTC traffic as an example.

In view of the characteristics of the mMTC traffic, the mMTC traffic is sent by using the narrowband in this embodiment, and the eMBB traffic or the URLLC traffic is sent by using the broadband, such as 20 MHz or other bandwidths. The broadband generally refers to the bandwidth used by the first type traffic such as the eMBB traffic. For example, the broadband is the bandwidth of 1.4 MHz or 3 MHz or 5 MHz or 10 MHz or 15 MHz or 20 MHz in long term evolution (LTE). The broadband may be bandwidth above 20 MHz supported in 5G technology. The narrowband generally refers to the bandwidth used by the third type traffic such as the mMTC traffic, and the bandwidth of the narrowband is generally less than or equal to the bandwidth used by the first type traffic such as the eMBB traffic. For example, the bandwidth of the narrowband is from tens of kHz to several MHz, or the bandwidth with a smaller or larger range.

The traffic processing method in the first embodiment may adopt the following two manners.

In the first manner, one or more mMTC patterns may be designed based on the characteristics of the mMTC traffic. The mMTC pattern is distributed on the entire duration or on a pre-configured time unit. The eMBB traffic is never sent in the time-frequency resources where the mMTC pattern is located. That is, no matter whether the mMTC traffic is sent in the time-frequency resource where the mMTC pattern is located, the eMBB traffic is never sent in these time-frequency resources.

The mMTC pattern occupies one or more narrowband in the broadband in the frequency domain. The bandwidth of the narrowband is smaller than the bandwidth of the broadband used by the eMBB traffic, so it is named as "narrowband"..

In the time domain, the mMTC pattern occupies one or more symbols, or one or more time slots, or one or more subframes, or one or more frames, or one or more burst durations, or one or more resource unit durations. Alternatively, the mMTC pattern occupies a combined duration of multiple above time units, such as the duration of several subframes and several symbols. Alternatively, the mMTC pattern is not limited in the time domain, which means that the entire duration can be used for sending the mMTC traffic. The definitions of the symbol, the time slot, the subframe, the frame, and the burst are not limited to the concept in LTE. That is, the symbol, the time slot, the subframe, the frame, and the burst may be time units in LTE, and may be the time units defined according to a new numerology or frame structure in 5G.

For example, assuming that the bandwidth of the broadband described above is 20 MHz, the broadband may be divided into X narrowband, including narrowband 1 to narrowband X. In this embodiment, the mMTC pattern occupies narrowband Y (1<=Y<=X) in the frequency domain and occupies 1 subframe in the time domain. In another example, the mMTC pattern in this embodiment occupies the narrowband Y in the frequency domain and occupies the entire duration in the time domain. At this time, if the eMBB traffic is sent, the narrowband Y and the entire transmission duration occupied by the eMBB traffic are reserved for the mMTC traffic.

The mMTC pattern may also be equivalent to the mMTC frame format. The mMTC time-frequency resource is reserved according to the mMTC frame format in the time-frequency resource of the eMBB traffic.

Furthermore, in order to minimize the impact on the spectrum efficiency and other traffic, in consideration of the low latency requirements of the mMTC service, the mMTC pattern may be reserved in pre-configured time unit. For example, the mMTC pattern may be reserved in an odd time slot or an odd subframe or an odd frame, or an even time slot or an even subframe or an even frame, or a first half subframe or a second half subframe, or a pre-configured time slot or subframe or frame. Other traffics are not sent on time domain resources or frequency domain resources corresponding to the mMTC pattern in these pre-configured time units.

Alternatively, the time unit in which the mMTC time domain or frequency domain pattern appears is pre-configured according to one or more of: the offset, the period and the duration. For example, if the offset is 0, the period is 100 ms, and the duration is 10 ms, the mMTC time domain or frequency domain pattern is configured in the durations or the time units of 0-10 ms, 100 ms-110 ms, or 200 ms-210 ms.

The advantage of the first manner is small signaling overhead.

In the second manner, one or more mMTC patterns may be designed based on the characteristics of the mMTC traffic. The mMTC pattern is distributed in the entire duration, or is distributed in the pre-configured time unit.

For the sending end, only when the mMTC traffic is sent in the time-frequency resource where the mMTC pattern is located, the eMBB traffic and other type traffics are not sent in this time-frequency resource. If no mMTC is sent in the time-frequency resource where the mMTC pattern is located, the eMBB traffic and/or other traffics may be sent in the time-frequency resource.

For the receiving end, only when the indication information indicating that the mMTC traffic exists is received, the receiving end considers that the time-frequency resource where the mMTC pattern is located is occupied by the mMTC traffic, and the eMBB traffic and other type traffics are not sent in the time-frequency resource. If the indication information indicating that the mMTC traffic exists is not received, or the indication information indicating that the mMTC traffic does not exist is received, the receiving end considers that the mMTC traffic does not exist in the resource, and the eMBB traffic and other type traffics can be sent in the time-frequency resource.

The mMTC pattern, in the frequency domain, occupies one or more narrowband in the broadband, and in the time domain, occupies one or more symbols, or one or more time slots, or one or more subframes, or one or more frames, or one or more burst durations, or one or more resource unit durations; or occupies a combined duration of multiple time units, such as the duration of several subframes and several symbols. Or the mMTC pattern is not limited in the time domain, which means that the entire duration may be, by default, used for sending the mMTC service. The symbol, the time slot, the subframe, the frame, and the burst are not limited to the concept in LTE. That is, the symbol, the time slot, the subframe, the frame, and the burst may be defined as time units in LTE, and may be the time units defined according to a new numerology or frame structure in 5G.

For example, assuming that the bandwidth of the broadband described above is 20 MHz, the broadband is divided into X narrowband, including narrowband 1 to narrowband X. In this embodiment, the mMTC pattern occupies narrowband Y (1<=Y<=X) in the frequency domain and occupies 1 subframe in the time domain. Alternatively, the mMTC pattern in this embodiment occupies the narrowband Y in the frequency domain and occupies the entire duration in the time domain. In this case, if the eMBB traffic is sent, the narrowband Y and the entire transmission duration occupied by the eMBB traffic are reserved for the mMTC traffic.

The mMTC pattern may also be equivalent to the mMTC frame format. The mMTC time-frequency resource is reserved according to the mMTC frame format in the time-frequency resource of the eMBB traffic.

Furthermore, in order to minimize the impact on the spectrum efficiency and other traffics, in consideration of the low latency requirements of the mMTC traffic, the mMTC pattern may be reserved in pre-configured time unit. For example, the mMTC pattern may be reserved in an odd time slot or an odd subframe or an odd frame, or an even time slot or an even subframe or an even frame, or a first half subframe or a second half subframe, or a pre-configured time slot or subframe or frame. When the mMTC traffic exists, other traffics are not sent in time domain resources or frequency domain resources corresponding to the mMTC pattern in these pre-configured time units.

Alternatively, the time unit in which the mMTC time domain or frequency domain pattern appears is pre-configured according to one or more of: the offset, the period and the duration. For example, if the offset is 0, the period is 100 ms, and the duration is 10 ms, the mMTC time domain or frequency domain pattern is configured in the duration or the time unit of 0-10 ms, 100 ms-110 ms, or 200 ms-210 ms.

The indication information of the sending end includes:
information indicating whether a time-frequency resource is occupied by the mMTC traffic and whether the mMTC traffic information exists; and/or
mMTC traffic type pattern information, which includes at least one of: information indicating whether a mMTC pattern exists, information indicating the time-frequency resource occupied by the mMTC pattern, and information indicating the type of the mMTC pattern; and/or
an efficient mMTC traffic duration or a duration of the mMTC pattern; and/or
a starting position of the mMTC traffic or a starting position of the mMTC pattern; and/or
an ending position of the mMTC traffic or an ending position of the mMTC pattern.

The sending end may send the indication information through one of RRC signaling, DCI, UCI, and the channel/the signal.

The advantage of the second manner is high spectrum efficiency and no resource waste.

In a second embodiment, the first type traffic and the second type traffic are transmitted together. For example, in this embodiment, the eMBB traffic and the URLLC traffic are transmitted together.

The traffic processing method in the second embodiment may adopt the following two manners.

In the first manner, since the characteristic of the second type traffic is low latency, the data packet is generally not very large, such as the data packet of the URLLC traffic. Therefore, the URLLC traffic has a higher transmission priority, and when the URLLC needs to be transmitted, the URLLC traffic is sent immediately or in a short time.

When no other type traffic is sent, the URLLC traffic may be sent according to the preset frame format and the sending manner, and the mixed transmission of the URLLC traffic and other type traffic is not involved.

When the first type traffic such as the eMBB traffic or the third type traffic such as the mMTC traffic exists, the URLLC traffic needs to be preferentially sent. For example, when both the eMBB traffic and the URLLC traffic need to be sent, the URLLC traffic is first sent, and the eMBB traffic is sent after the URLLC traffic is sent. Alternatively, the URLLC traffic is sent by dynamically inserting the URLLC traffic into the burst of the eMBB traffic, that is, the URLLC traffic is transmitted with the eMBB traffic.

In order to facilitate the receiving end such as the UE to detect other traffics such as the eMBB traffic and/or the URLLC traffic, the existence of the URLLC traffic needs to be indicated by an indicating signaling, or signal or channel. The UE receiving the eMBB traffic does not need to demodulate the eMBB traffic on the URLLC time-frequency resource, but demodulates the eMBB traffic by puncturing or by offsets . The signaling indicating that the URLLC traffic exists may be sent before the transmission of the URLLC traffic or may be sent at the beginning of the transmission of the URLLC traffic. For example, the signaling may be sent in the control section of the eMBB traffic, or may be sent in the control section of the URLLC traffic, or may be sent in the starting symbol occupied by the URLLC traffic, or may be sent in the control section of the subframe. The signal or the channel indicating that the URLLC traffic exists is generally sent in starting one or more symbols occupied by the URLLC traffic.

Furthermore, in order to minimize the complexity of the receiving end such as the UE for detecting other traffics such as the eMBB traffic and/or the URLLC traffic, one or more URLLC patterns may be pre-set according to the characteristics of the URLLC traffic. The pre-set URLLC pattern occupies the entire broadband frequency band in the frequency domain, such as a broadband of20 MHz or other bandwidth, which is similar to the eMBB traffic. In the time domain, the URLLC pattern occupies one or more symbols, or one or more time slots, or one or more subframes, or one or more frames, or one or more burst durations, or one or more resource unit durations; or occupies a combined duration of multiple above time units, such as the duration of several subframes and several symbols. Alternatively, the URLLC pattern is not limited in the time domain, which means that the entire duration may be, by default, used for sending the mMTC traffic. It is to be noted that the definitions of the symbol, the time slot, the subframe, the frame, and the burst are not limited to the concept in LTE. That is, the symbol, the time slot, the subframe, the frame, and the burst may be defined as time units in LTE, and may be the time units defined according to a new numerology or frame structure in 5G.

Furthermore, in this embodiment, the location of the URLLC pattern may be limited. For example, the starting position of the URLLC traffic or the starting position of the URLLC pattern is limited to be at a predefined position such as the beginning of the subframe, the beginning of the time slot, the beginning of the frame, the beginning of the burst, the symbol 0, or the symbol 7.

In an alternative embodiment, the URLLC traffic or the URLLC pattern is only in the preset time unit, such as in the odd time slot or odd subframe or odd frame, or in the even time slot or even subframe or even frame, or in the first half subframe or the second half subframe, or the time domain or the frequency domain resource reserved for the URLLC traffic or the URLLC pattern in the preset time slot or subframe or frame.

In another alternative embodiment, the URLLC traffic or the URLLC pattern is on time units in which the URLLC time domain or frequency domain pattern appears pre-configured according to one or more of: the offset, the period and the duration. For example, if the offset is 0, the period is 100 ms, and the duration is 10 ms, the mMTC time domain or frequency domain pattern is configured in the duration or the time unit of 0-10 ms, 100 ms-110 ms, or 200 ms-210 ms.

Furthermore, the URLLC pattern may be the URLLC frame format. The URLLC time-frequency resource is reserved according to the URLLC frame format in the time-frequency resource of the eMBB traffic.

For the sending end, only when the URLLC traffic is sent in the time-frequency resource where the URLLC pattern is located, the eMBB traffic and other type traffic is not sent in the time-frequency resource where the URLLC pattern is located. If no URLLC is sent in the time-frequency resource where the URLLC pattern is located, the time-frequency resource where the URLLC pattern is located can be used for sending the eMBB traffic and/or other traffic.

For the receiving end, only when the indication information indicating that the URLLC traffic exists is received, the time-frequency resource where the URLLC pattern is located is considered to be occupied by the URLLC traffic, and the eMBB traffic and other type traffic cannot be sent in the time-frequency resource. If the indication information indicating that the URLLC traffic exists is not received, or the indication information indicating that the URLLC traffic does not exist is received, the receiving end considers that the URLLC traffic does not exist in the time-frequency resource, and the eMBB traffic and other type traffic can be sent in the time-frequency resource.

The indication information of the sending end includes:
information regarding whether the URLLC exists; and/or
the URLLC pattern information, including at least one of: whether the URLLC pattern exists, the time-frequency resource occupied by the URLLC pattern, and an URLLC pattern type; and/or
an efficient duration of the URLLC or a duration of the URLLC pattern; and/or a starting position of the URLLC traffic or a starting position of the URLLC pattern; and/or
an ending position of the URLLC traffic or an ending position of the URLLC pattern.

In a third embodiment, the uplink transmission and the downlink transmission of the mixed traffics are described as an example (the implementation of the third embodiment may be applied to the first embodiment and the second embodiment). The third embodiment is specifically described below.

For the uplink transmission, that is in a case where the base station is the sending end, and the UE is the receiving end, the base station may allocate time-frequency resources according to the types of traffics currently transmitted between the base station and the served UE.

When the base station sends data, the eMBB traffic may never be mapped to the time-frequency resource where the mMTC pattern and/or the URLLC pattern is located. Alternatively, only when the mMTC traffic and/or the URLLC traffic is sent in the time-frequency resource the mMTC pattern and/or the URLLC pattern are located, the eMBB traffic is not mapped to the time-frequency resource where the mMTC pattern and/or the URLLC pattern is located.

If no mMTC traffic and/or URLLC traffic is sent in the time-frequency resource where the mMTC pattern and/or the URLLC pattern is located, the eMBB traffic may be mapped to the time-frequency resource where the mMTC pattern and/or the URLLC pattern is located.

For the uplink transmission, the base station is the receiving end, and the UE is the sending end, there are two manners.

In manner 1, the base station sends the cell-specific mMTC pattern information or the URLLC pattern information to the UE, and the UE does not send the uplink data of the eMBB traffic on these preset patterns.

In manner 2, the base station sends cell-specific time unit information to the UE. The UE possibly sends the mMTC traffic or the URLLC traffic in these time units, and the UE does not send the uplink data of the eMBB traffic in the preset resources of these specific time units. The preset resource is the mMTC pattern information and/or the URLLC pattern information.

The time unit information may be one or more of time slot information, subframe information, frame information, burst information, and resource unit information. For example, the time unit information may be the subframe information, which, for example, includes: an odd subframe, an even subframe, a first half subframe, a second half subframe, and a pre-configured specific subframe (such as subframe 1/2/3, subframe 5/6). The UE does not send the uplink data of the eMBB traffic in the preset resources of the specific time units. The preset resource is the mMTC pattern information and/or the URLLC pattern information.

In a fourth embodiment, the unlicensed carrier scenario is described using an example in which the first type traffic is the eMBB traffic, the second type traffic is the URLLC traffic, and the third type traffic is the mMTC traffic.

The base station or the UE listens to the unlicensed carrier in the broadband used by the eMBB traffic or the URLLC traffic. If the energy detection result is greater than or equal to the first threshold, it is determined that the unlicensed carrier is busy, and the data of the eMBB traffic or the URLLC traffic is not sent. If the energy detection result is less than or equal to the first threshold, it is determined that the unlicensed carrier is idle, and the data of the eMBB traffic or the URLLC traffic may be sent. The traffic type whose data is sent may be the eMBB traffic, and/or the mMTC traffic, and/or the URLLC traffic, and other various traffic.

The base station or the UE listens to the unlicensed carrier in the broadband used by the eMBB traffic or the URLLC traffic. If the energy detection result is greater than or equal to the first threshold, it is determined that the unlicensed carrier is busy in the broadband, and the data of the eMBB traffic or the URLLC traffic is not sent.

The base station or the UE listens to the unlicensed carrier in the narrowband. If the energy detection result is less than or equal to the second threshold, it is determined that the unlicensed carrier is busy in the narrowband, and the mMTC traffic may be sent.

When the eMBB traffic or the URLLC traffic needs to be sent, the base station or the UE listens to the unlicensed carrier in the broadband used by the eMBB traffic or the URLLC traffic.

When the mMTC traffic needs to be sent, the base station or the UE listens to the unlicensed carrier in the narrowband used by the mMTC traffic.

When the eMBB traffic or the URLLC traffic exists, the mMTC traffic is sent without listening to the unlicensed carrier.

When the used system bandwidth or the declaration bandwidth is the broadband, such as 20 MHz, for the case where only the eMBB traffic exists, and for the case where only the narrowband mMTC traffic exists, and for the case where both the eMBB traffic and the narrowband mMTC traffic exist, the bandwidth of the broadband needs to satisfy the unlicensed carrier regulation requirement, for example, to satisfy the requirement of occupying 80% or more of system bandwidth.

Alternatively, the system bandwidth used for sending the eMBB traffic is the broadband, and the system bandwidth used for sending the mMTC traffic is the narrowband. The eMBB traffic satisfies the unlicensed carrier regulation requirement for broadband, and the mMTC traffic satisfies the unlicensed carrier regulation requirement for narrowband. For example, when the eMBB traffic does not exist, the mMTC service only needs to satisfy the requirement of occupying 80% or more of the narrowband.

The embodiments of the present invention further provide a computer-readable storage medium configured to store computer-executable instructions for executing any traffic processing method described above.

It will be understood by those of ordinary skill in the art that all or part of the steps in the method described above may be implemented by related hardware instructed by one or more programs, and these programs may be stored in a computer-readable storage medium such as a ROM, a magnetic disk, an optical disk or the like. Optionally, all or some steps in the embodiments described above may also be implemented by using one or more integrated circuits. Each module/unit in the above embodiments may be implemented by hardware or a software function module.

### INDUSTRIAL APPLICABILITY

The embodiments of the present invention provide a traffic processing method and device. The method includes: processing, by a sending end, traffic data in a corresponding time-frequency resource according to a preset traffic type pattern, where the traffic data is a channel or a signal. By means of the technical solution, the problem of how to transmit multiple types of traffics with different characteristics in the same frequency band at the same time is solved, and the transmissions of different traffics in the same frequency band is supported. The collision problem and the latency problem between different types of traffics are reduced at the same time.

## Claims

1. A traffic processing method, comprising:
processing, by a sending end or a receiving end, traffic data in a corresponding time-frequency resource according to a traffic type pattern (101), wherein the traffic data comprises a channel or a signal, wherein the traffic type pattern comprises at least one of: a first traffic type pattern for sending a first type traffic sent by using broadband; a second traffic type pattern for sending a second type traffic having a lower latency requirement; and a third traffic type pattern for sending a third type traffic sent by using narrowband, wherein the traffic type pattern is distributed on an entire duration or is distributed in a pre-configured time unit,
**characterized in that**, the processing traffic data by the sending end in a corresponding time-frequency resource comprises:
in response to determining that the second type traffic or the third type traffic exists or sending indication information for indicating that the second type traffic and/or the third type traffic exists, not sending, by the sending end, the data of the first type traffic in the time-frequency resource occupied by the second traffic type pattern and/or the third traffic type pattern in the pre-configured time unit or the entire duration;
wherein the processing traffic data by the receiving end in a corresponding time-frequency resource comprises one of the followings:
in response to receiving indication information for indicating that the second type traffic and/or the third type traffic exists, determining that the data of the first type traffic does not exist in the time-frequency resource occupied by the second traffic type pattern and/or the third traffic type pattern, and not demodulating or decoding, by the receiving end, the data of the first type traffic in the time-frequency resource occupied by the second traffic type pattern and/or the third traffic type pattern; and
in response to receiving indication information for indicating that the second type traffic and/or the third type traffic does not exist and determining that the first type traffic is sent, the receiving end demodulates or decodes the data of the first type traffic;
the method further comprises:
scrambling, by the sending end, the indication information by using an RNTI corresponding to the traffic type.

2. The traffic processing method according to claim 1, wherein in case of processing, by a sending end, traffic data in a corresponding time-frequency resource according to a traffic type pattern, the second traffic type pattern occupies at least one of the followings in a time domain:
one or more symbols,
one or more symbol time slots,
one or more symbol subframes,
one or more symbol frames,
one or more symbol durations or resource unit durations,
one or more time units of a symbol burst duration, and
a combined duration of a plurality of time units;
the third traffic type pattern: occupies one or more narrowband frequency bands in the broadband in a frequency domain and occupies at least one of the followings in a time domain:
one or more symbols,
one or more time slots,
one or more subframes,
one or more frames,
one or more resource unit durations,
one or more time units of a burst duration, and
occupies a combined duration of a plurality of time units.

3. The traffic processing method according to claim 1,
wherein the pre-configured time unit comprises one of the followings:
an odd time slot or an odd subframe or an odd frame,
an even time slot or an even subframe or an even frame,
a first half subframe,
a second half subframe,
a pre-configured time slot,
a pre-configured subframe,
a pre-configured frame,
a pre-configured burst duration,
a pre-configured resource unit, and
a time unit occupied by the traffic type pattern is pre-configured according to at least one of an offset, a period and a duration.

4. The traffic processing method according to claim 1, wherein the indication information comprises at least one of the followings:
information indicating whether a time-frequency resource is occupied by a traffic and whether the traffic has a traffic type;
information indicating whether a traffic type pattern exists;
information indicating the time-frequency resource occupied by the traffic type pattern;
information indicating the type of the traffic type pattern;
a traffic type traffic duration or a duration of the traffic type pattern;
a starting position of the traffic type traffic or a starting position of the traffic type pattern;
an ending position of the traffic type traffic or an ending position of the traffic type pattern; and
information of a time unit where the traffic type pattern appears, comprising at least one of: a period, an offset and a duration.

5. The traffic processing method according to claim 1 or 4, wherein the indication information is carried in one of: radio resource control, RRC, signaling, uplink control information, UCI, downlink control information, DCI, and the channel/the signal.

6. The traffic processing method according to claim 1 or 4, wherein the receiving end receiving the indication information at least supports the first traffic type.

7. The traffic processing method according to claim 1, wherein the traffic type pattern comprises the second traffic type pattern; and
the step of sending the traffic data in the corresponding time-frequency resource comprises:
in response to determining that the first type traffic or the third type traffic exists, preferentially sending the second type traffic; or sending data of the second type traffic by dynamically inserting the data of the second type traffic into a burst of the first type traffic or the third type traffic.

8. The traffic processing method according to claim 1 or 7, further comprising: sending, by the sending end, one of: indicating signaling, an indicating signal, and an indicating channel for indicating that the second type traffic currently exists,
wherein the signaling is sent by one of a control section of the first type traffic, a control section of the second type traffic, a starting one of symbols occupied by the second type traffic, and a control section of a subframe,
or wherein the indicating signal or the indicating channel for indicating that the second type traffic exists is sent in starting one or more of the symbols occupied by the second type traffic.

9. The traffic processing method according to claim 1, wherein the sending end is a base station or a user equipment, UE, or wherein the receiving end is a base station or a UE,
when the sending end is a UE,
in response to determining that the UE receives a cell-specific or UE group-specific or traffic type-specific second traffic type pattern information and/or third traffic type pattern information from the base station, the UE does not send uplink data of the first type traffic in the second traffic type pattern and/or the third traffic type pattern; or
in response to determining that the UE receives cell-specific or UE group-specific or traffic type-specific time unit information from the base station, the sending end does not send the uplink data of the first type traffic in a preset resource in the time unit, wherein the preset resource is the second traffic type pattern information and/or the third traffic type pattern information; or
in response to not receiving the information indicating that the second type traffic and/or the third type traffic exists or receiving information indicating that the second type traffic and/or the third type traffic exists.

10. The traffic processing method according to claim 1, further comprising at least one of the followings: listening to, by the sending end, an unlicensed carrier in a broadband bandwidth used by the first type traffic or the second type traffic to obtain a first energy detection result; and listening to, by the sending end, the unlicensed carrier in a sub-band or the narrowband to obtain a second energy detection result;
wherein a first threshold is an energy detection threshold for the broadband bandwidth used by the first type traffic or the second type traffic, and a second threshold is an energy detection threshold for a sub-band bandwidth or a narrowband bandwidth.

11. The traffic processing method according to claim 10, wherein in response to determining that the first type traffic or the second type traffic needs to be sent, the method further comprises:
in response to determining that the first energy detection result is greater than or equal to the first threshold, determining that the unlicensed carrier is busy, and not sending data of the first type traffic or the second type traffic;
in response to determining that the first energy detection result is less than the first threshold, and the second energy detection result is greater than or equal to the second threshold, determining that the unlicensed carrier is busy, and not sending the data of the first type traffic and/or the second type traffic; and
in response to determining that the first energy detection result is less than the first threshold, and the second energy detection result is less than the second threshold, determining that the unlicensed carrier is idle, and sending the data of the first traffic type and/or the second traffic type,
or wherein in response to determining that the third type traffic needs to be sent, the method further comprises:
in response to determining that the second energy detection result is greater than or equal to the second threshold, determining that the unlicensed carrier is busy, and not sending data of the third type traffic; and
in response to determining that the second energy detection result is less than the second threshold, determining that the unlicensed carrier is idle, and sending the data of the third type traffic,
or wherein in response to determining that the third type traffic needs to be sent, the method further comprises:
in response to determining that the first energy detection result is greater than or equal to the first threshold, determining that the unlicensed carrier is busy, and not sending data of the third type traffic;
in response to determining that the first energy detection result is less than the first threshold, and the second energy detection result is greater than or equal to the second threshold, determining that the unlicensed carrier is busy, and not sending the data of the third type traffic; and
in response to determining that the first energy detection result is less than the first threshold, and the second energy detection result is less than the second threshold, determining that the unlicensed carrier is idle, and sending the data of the third type traffic.

12. The traffic processing method according to claim 10, wherein the sub-bands are formed by dividing the broadband bandwidth used by the first type traffic and each have a predefined bandwidth; and
the bandwidths of the sub-bands are the same or different; or bandwidths of some of the sub-bands are the same, and bandwidths of another some of the sub-bands are different,
or wherein the sub-bands formed by dividing the broadband bandwidth used by the first type and each have a predefined bandwidth; and
the bandwidth of the sub-band is equal to a bandwidth used by the third type traffic; or bandwidths of one or more of the sub-bands are equal to the bandwidth used by the third type traffic.

13. The traffic processing method according to claim 1, wherein in response to determining that a used system bandwidth or a declaration bandwidth is the broadband, and at least one of the first type traffic and the third type traffic exist,
an unlicensed carrier regulation requirement for the broadband bandwidth is satisfied;
or
the system bandwidth sent by the first type traffic is the broadband, and the system bandwidth used by the third type traffic is the narrowband, wherein the first type traffic satisfies the unlicensed carrier regulation requirement for the broadband bandwidth, and the third type traffic satisfies the unlicensed carrier regulation requirement for a narrowband bandwidth;
wherein the unlicensed carrier regulation requirement comprises at least one of: an occupied channel bandwidth requirement, an energy detection threshold requirement, and a maximum transmit power spectral density requirement or a power spectral density requirement.

14. A computer-readable storage medium storing computer-executable instructions which, when executed by a computer, cause the computer to carry out the traffic processing method of any one of claims 1 to 13.

## Patentansprüche

1. Datenverkehrverarbeitungsverfahren, das Folgendes umfasst:
Verarbeiten von Datenverkehrsdaten durch ein Sendeende oder ein Empfangsende in einer entsprechenden Zeit-Frequenz-Ressource gemäß einem Datenverkehrstypmuster (101), wobei die Datenverkehrsdaten einen Kanal oder ein Signal umfassen, wobei das Datenverkehrstypmuster mindestens eines von Folgenden umfasst: ein erstes Datenverkehrstypmuster zum Senden eines ersten Typs von Datenverkehr, der unter Verwendung eines Breitbands gesendet wird; ein zweites Datenverkehrstypmuster zum Senden eines zweiten Typs von Datenverkehr, der eine geringere Latenzanforderung aufweist; und ein drittes Datenverkehrstypmuster zum Senden eines dritten Typs von Datenverkehr, der unter Verwendung eines Schmalbands gesendet wird, wobei das Datenverkehrstypmuster über eine gesamte Dauer verteilt ist oder in einer vorkonfigurierten Zeiteinheit verteilt ist,
**dadurch gekennzeichnet, dass** das Verarbeiten von Datenverkehrsdaten durch das Sendeende in einer entsprechenden Zeit-Frequenz-Ressource Folgendes umfasst:
als Reaktion auf Bestimmen, dass der zweite Typ von Datenverkehr oder der dritte Typ von Datenverkehr vorhanden ist, oder Senden von Angabeinformationen zum Angeben, dass der zweite Typ von Datenverkehr und/oder der dritte Typ von Datenverkehr vorhanden ist/sind, Nicht-Senden der Daten des ersten Typs von Datenverkehr durch das Sendeende in der Zeit-Frequenz-Ressource, die durch das zweite Datenverkehrstypmuster und/oder das dritte Datenverkehrstypmuster belegt ist, in der vorkonfigurierten Zeiteinheit oder über die gesamte Dauer;
wobei das Verarbeiten der Datenverkehrsdaten durch das Empfangsende in einer entsprechenden Zeit-Frequenz-Ressource eines der Folgenden umfasst:
als Reaktion auf Empfangen von Angabeinformationen zum Angeben, dass der zweite Typ von Datenverkehr und/oder der dritte Typ von Datenverkehr vorhanden ist, Bestimmen, dass die Daten des ersten Typs von Datenverkehr in der durch das zweite Datenverkehrstypmuster und/oder das dritte Datenverkehrstypmuster belegten Zeit-Frequenz-Ressource nicht vorhanden sind, und Nicht-Demodulieren oder Nicht-Decodieren der Daten des ersten Typs von Datenverkehr durch das Empfangsende in der durch das zweite Datenverkehrstypmuster und/oder das dritte Datenverkehrstypmuster belegten Zeit-Frequenz-Ressource; und
als Reaktion auf Empfangen von Angabeinformationen zum Angeben, dass der zweite Typ von Datenverkehr und/oder der dritte Typ von Datenverkehr nicht vorhanden ist/sind, und Bestimmen, dass der erste Typ von Datenverkehr gesendet wird, Demodulieren oder Decodieren der Daten des ersten Typs von Datenverkehr durch das Empfangsende;
wobei das Verfahren ferner Folgendes umfasst:
Verschlüsseln der Angabeinformationen durch das Sendeende unter Verwendung einer RNTI entsprechend dem Datenverkehrstyp.

2. Datenverkehrverarbeitungsverfahren nach Anspruch 1, wobei im Falle eines Verarbeitens von Datenverkehrsdaten in einer entsprechenden Zeit-Frequenz-Ressource gemäß einem Datenverkehrstypmuster durch eine Sendeeinheit das zweite Datenverkehrstypmuster mindestens eines der Folgenden in einer Zeitdomain belegt:
ein oder mehrere Symbole,
ein oder mehrere Symbolzeitfenster,
einen oder mehrere Symbol-Subframes,
einen oder mehrere Symbol-Frames,
einen oder mehrere Symbolzeiträume oder Ressourceneinheitszeiträume,
eine oder mehrere Zeiteinheiten einer Symbol-Burst-Dauer und
eine kombinierte Dauer einer Vielzahl von Zeiteinheiten;
wobei das dritte Datenverkehrstypmuster ein oder mehrere Schmalband-Frequenzbänder in dem Breitband in einer Frequenzdomain belegt und mindestens eines der Folgenden in einer Zeitdomain belegt:
ein oder mehrere Symbole,
ein oder mehrere Zeitfenster,
einen oder mehrere Subframes,
einen oder mehrere Frames,
einen oder mehrere Ressourceneinheitszeiträume,
eine oder mehrere Zeiteinheiten einer Burst-Dauer und
eine kombinierte Dauer einer Vielzahl von Zeiteinheiten belegt.

3. Datenverkehrverarbeitungsverfahren nach Anspruch 1,
wobei die vorkonfigurierte Zeiteinheit eines der Folgenden umfasst:
ein ungeradzahliges Zeitfenster oder einen ungeradzahligen Subframe oder einen ungeradzahligen Frame,
ein geradzahliges Zeitfenster oder einen geradzahligen Subframe oder einen geradzahligen Frame,
einen ersten halben Subframe,
einen zweiten halben Subframe,
ein vorkonfiguriertes Zeitfenster,
einen vorkonfigurierten Subframe,
einen vorkonfigurierten Frame,
eine vorkonfigurierte Burst-Dauer,
eine vorkonfigurierte Ressourceneinheit und
wobei eine Zeiteinheit, die durch das Datenverkehrstypmuster belegt ist, gemäß mindestens einem von einem Versatz, einer Zeitperiode und einer Dauer vorkonfiguriert ist.

4. Datenverkehrverarbeitungsverfahren nach Anspruch 1, wobei die Angabeinformationen mindestens eines der Folgenden umfassen:
Informationen, die angeben, ob eine Zeit-Frequenz-Ressource durch einen Datenverkehr belegt ist und ob der Datenverkehr einen Datenverkehrstyp aufweist;
Informationen, die angeben, ob ein Datenverkehrstypmuster vorhanden ist;
Informationen, die die Zeit-Frequenz-Ressource angeben, die durch das Datenverkehrstypmuster belegt ist;
Informationen, die den Typ des Datenverkehrstypmusters angeben;
eine Datenverkehrsdauer des Datenverkehrstyps oder eine Dauer des Datenverkehrstypmusters;
eine Startposition des Datenverkehrs des Datenverkehrstyps oder eine Startposition des Datenverkehrstypmusters;
eine Endposition des Datenverkehrs des Datenverkehrstyps oder eine Endposition des Datenverkehrstypmusters; und
Informationen einer Zeiteinheit, in der das Datenverkehrstypmuster auftritt, umfassend mindestens eines von Folgenden: eine Zeitperiode, einen Versatz und eine Dauer.

5. Datenverkehrverarbeitungsverfahren nach Anspruch 1 oder 4, wobei die Angabeinformationen in einem von Folgenden übertragen werden: einer Funkressourcensteuerungssignalisierung (RRC-Signalisierung), Uplink-Steuerinformationen (UCI), Downlink-Steuerinformationen (DCI) und dem Kanal/dem Signal.

6. Datenverkehrverarbeitungsverfahren nach Anspruch 1 oder 4, wobei das Empfangsende, das die Angabeinformationen empfängt, mindestens den ersten Datenverkehrstyp unterstützt.

7. Datenverkehrverarbeitungsverfahren nach Anspruch 1, wobei das Datenverkehrstypmuster das zweite Datenverkehrstypmuster umfasst; und
der Schritt des Sendens der Datenverkehrsdaten in der entsprechenden Zeit-Frequenz-Ressource Folgendes umfasst:
als Reaktion auf Bestimmen, dass der erste Typ von Datenverkehr oder der dritte Typ von Datenverkehr vorhanden ist, vorzugsweise Senden des zweiten Typs von Datenverkehr; oder Senden von Daten des zweiten Typs von Datenverkehr durch dynamisches Einfügen der Daten des zweiten Typs von Datenverkehr in einen Burst des ersten Typs von Datenverkehr oder des dritten Typs von Datenverkehr.

8. Datenverkehrverarbeitungsverfahren nach Anspruch 1 oder 7, ferner umfassend: Senden eines von Folgenden durch das Sendeende: Angabesignalisierung, ein Angabesignal und einen Angabekanal zum Angeben, dass der zweite Typ von Datenverkehr derzeit vorhanden ist,
wobei die Signalisierung durch eines von einem Steuerabschnitt des ersten Typs von Datenverkehr, einem Steuerabschnitt des zweiten Typs von Datenverkehr, einem Startsymbol von durch den zweiten Typ von Datenverkehr belegten Symbolen und einem Steuerabschnitt eines Subframes gesendet wird,
oder wobei das Angabesignal oder der Angabekanal zum Angeben, dass der zweite Typ von Datenverkehr vorhanden ist, in einem Startsymbol eines oder mehrerer der Symbole, die durch den zweiten Typ von Datenverkehr belegt sind, gesendet wird.

9. Datenverkehrverarbeitungsverfahren nach Anspruch 1, wobei das Sendeende eine Basisstation oder ein Benutzergerät (user equipment - UE) ist oder wobei das Empfangsende eine Basisstation oder ein UE ist,
wenn das Sendeende ein UE ist,
als Reaktion auf Bestimmen, dass das UE zellenspezifische oder UE-gruppenspezifische oder datenverkehrstypspezifische zweite Datenverkehrstypmusterinformationen und/oder dritte Datenverkehrstypmusterinformationen von der Basisstation empfängt, das UE keine Uplink-Daten des ersten Typs von Datenverkehr in dem zweiten Datenverkehrstypmuster und/oder dem dritten Datenverkehrstypmuster sendet; oder
als Reaktion auf Bestimmen, dass das UE zellenspezifische oder UE-gruppenspezifische oder datenverkehrstypspezifische Zeiteinheitsinformationen von der Basisstation empfängt, das Sendeende keine Uplink-Daten des ersten Typs von Datenverkehr in einer vorab festgelegten Ressource in der Zeiteinheit sendet,
wobei die vorab festgelegte Ressource die zweiten Datenverkehrstypmusterinformationen und/oder die dritten Datenverkehrstypmusterinformationen ist; oder
als Reaktion auf Nicht-Empfangen der Informationen, die angeben, dass der zweite Typ von Datenverkehr und/oder der dritte Typ von Datenverkehr vorhanden ist, oder Empfangen von Informationen, die angeben, dass der zweite Typ von Datenverkehr und/oder der dritte Typ von Datenverkehr vorhanden ist.

10. Datenverkehrverarbeitungsverfahren nach Anspruch 1, ferner umfassend mindestens eines von Folgenden: Überwachen auf einen nichtlizensierten Träger in einer Breitbandbandbreite, die durch den ersten Typ von Datenverkehr oder den zweiten Typ von Datenverkehr verwendet wird, durch die Sendeeinheit, um ein erstes Energieerfassungsergebnis zu erhalten; und Überwachen auf den nichtlizensierten Träger in einem Teilband oder dem Schmalband durch das Sendeende, um ein zweites Energieerfassungsergebnis zu erhalten;
wobei ein erster Schwellenwert ein Energieerfassungsschwellenwert für die durch den ersten Typ von Datenverkehr oder den zweiten Typ von Datenverkehr verwendete Breitbandbandbreite ist und ein zweiter Schwellenwert ein Energieerfassungsschwellenwert für eine Teilbandbandbreite oder eine Schmalbandbandbreite ist.

11. Verkehrsdatenverarbeitungsverfahren nach Anspruch 10, wobei das Verfahren als Reaktion auf Bestimmen, dass der erste Typ von Datenverkehr oder der zweite Typ von Datenverkehr gesendet werden muss, ferner Folgendes umfasst:
als Reaktion auf Bestimmen, dass das erste Energieerfassungsergebnis über dem ersten Schwellenwert liegt oder gleich diesem ist, Bestimmen, dass der nichtlizensierte Träger ausgelastet ist, und Nicht-Senden von Daten des ersten Typs von Datenverkehr oder des zweiten Typs von Datenverkehr;
als Reaktion auf Bestimmen, dass das erste Energieerfassungsergebnis unter dem ersten Schwellenwert liegt und das zweite Energieerfassungsergebnis über dem zweiten Schwellenwert liegt oder gleich diesem ist, Bestimmen, dass der nichtlizensierte Träger ausgelastet ist, und Nicht-Senden der Daten des ersten Typs von Datenverkehr und/oder des zweiten Typs von Datenverkehr; und
als Reaktion auf Bestimmen, dass das erste Energieerfassungsergebnis unter dem ersten Schwellenwert liegt und das zweite Energieerfassungsergebnis unter dem zweiten Schwellenwert liegt, Bestimmen, dass der nichtlizensierte Träger nicht ausgelastet ist, und Senden der Daten des ersten Typs von Datenverkehr und/oder des zweiten Typs von Datenverkehr,
oder wobei das Verfahren als Reaktion auf Bestimmen, dass der dritte Typ von Datenverkehr gesendet werden muss, ferner Folgendes umfasst:
als Reaktion auf Bestimmen, dass das zweite Energieerfassungsergebnis über dem zweiten Schwellenwert liegt oder gleich diesem ist, Bestimmen, dass der nichtlizensierte Träger ausgelastet ist, und Nicht-Senden von Daten des dritten Typs von Datenverkehr; und
als Reaktion auf Bestimmen, dass das zweite Energieerfassungsergebnis unter dem zweiten Schwellenwert liegt, Bestimmen, dass der nichtlizensierte Träger nicht ausgelastet ist, und Senden der Daten des dritten Typs von Datenverkehr,
oder wobei das Verfahren als Reaktion auf Bestimmen, dass der dritte Typ von Datenverkehr gesendet werden muss, ferner Folgendes umfasst:
als Reaktion auf Bestimmen, dass das erste Energieerfassungsergebnis über dem ersten Schwellenwert liegt oder gleich diesem ist, Bestimmen, dass der nichtlizensierte Träger ausgelastet ist, und Nicht-Senden von Daten des dritten Typs von Datenverkehr;
als Reaktion auf Bestimmen, dass das erste Energieerfassungsergebnis unter dem ersten Schwellenwert liegt und das zweite Energieerfassungsergebnis über dem zweiten Schwellenwert liegt oder gleich diesem ist, Bestimmen, dass der nichtlizensierte Träger ausgelastet ist, und Nicht-Senden der Daten des dritten Typs von Datenverkehr; und
als Reaktion auf Bestimmen, dass das erste Energieerfassungsergebnis unter dem ersten Schwellenwert liegt und das zweite Energieerfassungsergebnis unter dem zweiten Schwellenwert liegt, Bestimmen, dass der nichtlizensierte Träger nicht ausgelastet ist, und Senden der Daten des dritten Typs von Datenverkehr.

12. Datenverkehrverarbeitungsverfahren nach Anspruch 10, wobei die Teilbänder durch Teilen der Breitbandbandbreite, die durch den ersten Typ von Datenverkehr verwendet wird, gebildet werden und jeweils eine vordefinierte Bandbreite aufweisen; und
die Bandbreiten der Teilbänder gleich oder unterschiedlich sind; oder Bandbreiten einiger der Teilbänder gleich sind und Bandbreiten einiger anderer der Teilbänder unterschiedlich sind, oder wobei die Teilbänder durch Teilen der Breitbandbandbreite, die durch den ersten Typ verwendet wird, gebildet werden und jeweils eine vordefinierte Bandbreite aufweisen; und
die Bandbreite des Teilbands gleich einer Bandbreite ist, die durch den dritten Typ von Datenverkehr verwendet wird; oder Bandbreiten eines oder mehrerer der Teilbänder gleich der Bandbreite sind, die durch den dritten Typ von Datenverkehr verwendet wird.

13. Datenverkehrverarbeitungsverfahren nach Anspruch 1, wobei als Reaktion auf Bestimmen, dass eine verwendete Systembandbreite oder eine Anmeldungsbandbreite das Breitband ist und mindestens einer von dem ersten Typ von Datenverkehr und dem dritten Typ von Datenverkehr vorhanden ist,
eine Regulierungsanforderung des nichtlizensierten Trägers für die Breitbandbandbreite erfüllt ist;
oder
die durch den ersten Typ von Datenverkehr gesendete Systembandbreite das Breitband ist und die durch den dritten Typ von Datenverkehr verwendete Systembandbreite das Schmalband ist, wobei der erste Typ von Datenverkehr die Regulierungsanforderung des nichtlizensierten Trägers für die Breitbandbandbreite erfüllt und der dritte Typ von Datenverkehr die Regulierungsanforderung des nichtlizensierten Trägers für eine Schmalbandbandbreite erfüllt;
wobei die Regulierungsanforderung des nichtlizensierten Trägers mindestens eines von Folgenden umfasst: eine Anforderung einer Bandbreite eines belegten Kanals, eine Anforderung des Energieerfassungsschwellenwerts und eine Anforderung einer maximalen Übertragungsleistungsspektraldichte oder eine Anforderung einer Leistungsspektraldichte.

14. Computerlesbares Speichermedium, das computerausführbare Anweisungen speichert, die bei Ausführung durch einen Computer den Computer dazu veranlassen, das Datenverkehrverarbeitungsverfahren nach einem der Ansprüche 1 bis 13 auszuführen.

## Revendications

1. Procédé de traitement de trafic, comprenant :
le traitement, par une extrémité émettrice ou une extrémité réceptrice, de données de trafic dans une ressource temps-fréquence correspondante selon un modèle de type de trafic (101), dans lequel les données de trafic comprennent un canal ou un signal, dans lequel le modèle de type de trafic comprend au moins l'un parmi : un premier modèle de type de trafic pour envoyer un premier type de trafic envoyé en utilisant une large bande ; un deuxième modèle de type de trafic pour envoyer un deuxième type de trafic ayant une exigence de latence inférieure ; et un troisième modèle de type de trafic pour envoyer un troisième type de trafic envoyé en utilisant une bande étroite, dans lequel le modèle de type de trafic est réparti sur une durée entière ou est réparti dans une unité de temps préconfigurée,
**caractérisé en ce que** les données de trafic de traitement par l'extrémité émettrice dans une ressource temps-fréquence correspondante comprennent :
en réponse à la détermination de l'existence du deuxième type de trafic ou du troisième type de trafic ou à l'envoi d'informations d'indication pour indiquer que le deuxième type de trafic et/ou le troisième type de trafic existe, l'absence d'envoi, par l'extrémité émettrice, des données du premier type de trafic dans la ressource temps-fréquence occupée par le deuxième modèle de type de trafic et/ou le troisième modèle de type de trafic dans l'unité de temps préconfigurée ou la durée entière ;
dans lequel les données de trafic de traitement par l'extrémité réceptrice dans une ressource temps-fréquence correspondante comprennent l'un des éléments suivants :
en réponse à la réception d'informations d'indication pour indiquer que le deuxième type de trafic et/ou le troisième type de trafic existe, la détermination que les données du premier type de trafic n'existent pas dans la ressource temps-fréquence occupée par le deuxième modèle de type de trafic et/ou le troisième modèle de type de trafic, et l'absence de démodulation ou de décodage, par l'extrémité réceptrice, des données du premier type de trafic dans la ressource temps-fréquence occupée par le deuxième modèle de type de trafic et/ou le troisième modèle de type de trafic ; et
en réponse à la réception d'informations d'indication pour indiquer que le deuxième type de trafic et/ou le troisième type de trafic n'existe pas et à la détermination que le premier type de trafic est envoyé, l'extrémité réceptrice démodule ou décode les données du premier type de trafic ;
le procédé comprend en outre :
le brouillage, par l'extrémité émettrice, des informations d'indication en utilisant un RNTI correspondant au type de trafic.

2. Procédé de traitement de trafic selon la revendication 1, dans lequel en cas de traitement, par une extrémité émettrice, de données de trafic dans une ressource temps-fréquence correspondante selon un modèle de type de trafic, le deuxième modèle de type de trafic occupe au moins l'un des éléments suivants dans un domaine temporel :
un ou plusieurs symboles,
un ou plusieurs intervalles de temps de symbole,
une ou plusieurs sous-trames de symbole,
une ou plusieurs trames de symbole,
une ou plusieurs durées de symbole ou durées d'unité de ressource,
une ou plusieurs unités de temps d'une durée de salve de symbole, et
une durée combinée d'une pluralité d'unités de temps ;
le troisième modèle de type de trafic : occupe une ou plusieurs bandes de fréquences à bande étroite dans la bande large dans un domaine fréquentiel et occupe au moins l'un des éléments suivants dans un domaine temporel :
un ou plusieurs symboles,
un ou plusieurs intervalles de temps,
une ou plusieurs sous-trames,
une ou plusieurs trames,
une ou plusieurs durées d'unité de ressource,
une ou plusieurs unités de temps d'une durée de salve, et
occupe une durée combinée d'une pluralité d'unités de temps.

3. Procédé de traitement de trafic selon la revendication 1, dans lequel l'unité de temps préconfigurée comprend l'un des éléments suivants :
un intervalle de temps impair ou une sous-trame impaire ou une trame impaire,
un intervalle de temps pair ou une sous-trame paire ou une trame paire,
une première moitié de sous-trame,
une seconde moitié de sous-trame,
un intervalle de temps préconfiguré,
une sous-trame préconfigurée,
une trame préconfigurée,
une durée de salve préconfigurée,
une unité de ressource préconfigurée, et
une unité de temps occupée par le modèle de type de trafic est préconfigurée selon au moins l'un parmi un décalage, une période et une durée.

4. Procédé de traitement de trafic selon la revendication 1, dans lequel les informations d'indication comprennent au moins l'un des éléments suivants :
des informations indiquant si une ressource temps-fréquence est occupée par un trafic et si le trafic a un type de trafic ;
des informations indiquant s'il existe un modèle de type de trafic ;
des informations indiquant la ressource temps-fréquence occupée par le modèle de type de trafic ;
des informations indiquant le type du modèle de type de trafic ;
une durée de trafic de type de trafic ou une durée du modèle de type de trafic ;
une position de départ du trafic de type de trafic ou une position de départ du modèle de type de trafic ;
une position de fin du trafic de type de trafic ou une position de fin du modèle de type de trafic ; et
des informations d'une unité de temps où le modèle de type de trafic apparaît, comprenant au moins l'un parmi : une période, un décalage et une durée.

5. Procédé de traitement de trafic selon la revendication 1 ou 4, dans lequel les informations d'indication sont transportées dans l'un parmi : une signalisation de contrôle de ressources radio, RRC, des informations de contrôle de liaison montante, UCI, des informations de contrôle de liaison descendante, DCI et le canal/le signal.

6. Procédé de traitement de trafic selon la revendication 1 ou 4, dans lequel l'extrémité réceptrice recevant les informations d'indication prend en charge au moins le premier type de trafic.

7. Procédé de traitement de trafic selon la revendication 1, dans lequel le modèle de type de trafic comprend le deuxième modèle de type de trafic ; et
l'étape d'envoi des données de trafic dans la ressource temps-fréquence correspondante comprend :
en réponse à la détermination de l'existence du premier type de trafic ou du troisième type de trafic, l'envoi de préférence du deuxième type de trafic ; ou l'envoi de données du deuxième type de trafic en insérant dynamiquement les données du trafic du deuxième type de trafic dans une salve du premier type de trafic ou du troisième type de trafic.

8. Procédé de traitement de trafic selon la revendication 1 ou 7, comprenant en outre : l'envoi, par l'extrémité émettrice, de l'un parmi : une signalisation d'indication, un signal d'indication et un canal d'indication pour indiquer que le deuxième type de trafic existe actuellement,
dans lequel la signalisation est envoyée par l'un parmi une section de contrôle du premier type de trafic, une section de contrôle du deuxième type de trafic, un symbole de départ parmi les symboles occupés par le deuxième type de trafic et une section de contrôle d'une sous-trame,
ou dans lequel le signal d'indication ou le canal d'indication pour indiquer que le deuxième type de trafic existe est envoyé dans un ou plusieurs symboles de départ parmi les symboles occupés par le deuxième type de trafic.

9. Procédé de traitement de trafic selon la revendication 1, dans lequel l'extrémité émettrice est une station de base ou un équipement utilisateur, UE, ou dans lequel l'extrémité réceptrice est une station de base ou un UE,
lorsque l'extrémité émettrice est un UE,
en réponse à la détermination que l'UE reçoit des informations de deuxième modèle de type de trafic et/ou des informations de troisième modèle type de trafic spécifiques à une cellule ou spécifiques à un groupe d'UE ou spécifiques à un type de trafic depuis la station de base, l'UE n'envoie pas de données de liaison montante du premier type de trafic dans le deuxième modèle de type de trafic et/ou le troisième modèle de type de trafic ; ou
en réponse à la détermination que l'UE reçoit des informations d'unité de temps spécifiques à une cellule ou spécifiques à un groupe d'UE ou spécifiques à un type de trafic depuis la station de base, l'extrémité émettrice n'envoie pas les données de liaison montante du premier type de trafic dans une ressource prédéfinie dans l'unité de temps, dans lequel la ressource prédéfinie est les informations de deuxième modèle de type de trafic et/ou les informations de troisième modèle de type de trafic ; ou
en réponse à la non-réception des informations indiquant que le deuxième type de trafic et/ou le troisième type de trafic existe ou à la réception d'informations indiquant que le deuxième type de trafic et/ou le troisième type de trafic existe.

10. Procédé de traitement de trafic selon la revendication 1, comprenant en outre au moins l'un des éléments suivants :
l'écoute, par l'extrémité émettrice, d'une porteuse sans licence dans une bande passante à large bande utilisée par le premier type de trafic ou le deuxième type de trafic pour obtenir un premier résultat de détection d'énergie ; et l'écoute, par l'extrémité émettrice, de la porteuse sans licence dans une sous-bande ou la bande étroite pour obtenir un second résultat de détection d'énergie ;
dans lequel un premier seuil est un seuil de détection d'énergie pour la bande passante à large bande utilisée par le premier type de trafic ou le deuxième type de trafic, et un second seuil est un seuil de détection d'énergie pour une bande passante à sous-bande ou une bande passante à bande étroite.

11. Procédé de traitement de trafic selon la revendication 10, dans lequel en réponse à la détermination que le premier type de trafic ou le deuxième type de trafic doit être envoyé, le procédé comprend en outre :
en réponse à la détermination que le premier résultat de détection d'énergie est supérieur ou égal au premier seuil, la détermination que la porteuse sans licence est occupée, et l'absence d'envoi de données du premier type de trafic ou du deuxième type de trafic ;
en réponse à la détermination que le premier résultat de détection d'énergie est inférieur au premier seuil, et que le second résultat de détection d'énergie est supérieur ou égal au second seuil, la détermination que la porteuse sans licence est occupée, et l'absence d'envoi des données du premier type de trafic et/ou du deuxième type de trafic ; et
en réponse à la détermination que le premier résultat de détection d'énergie est inférieur au premier seuil, et que le second résultat de détection d'énergie est inférieur au second seuil, la détermination que la porteuse sans licence est inactive, et l'envoi des données du premier type de trafic et/ou du deuxième type de trafic,
ou dans lequel en réponse à la détermination que le troisième type de trafic doit être envoyé, le procédé comprend en outre :
en réponse à la détermination que le second résultat de détection d'énergie est supérieur ou égal au second seuil, la détermination que la porteuse sans licence est occupée, et l'absence d'envoi de données du troisième type de trafic ; et
en réponse à la détermination que le second résultat de détection d'énergie est inférieur au second seuil, la détermination que la porteuse sans licence est inactive, et l'envoi des données du troisième type de trafic,
ou dans lequel en réponse à la détermination que le troisième type de trafic doit être envoyé, le procédé comprend en outre :
en réponse à la détermination que le premier résultat de détection d'énergie est supérieur ou égal au premier seuil, la détermination que la porteuse sans licence est occupée, et l'absence d'envoi de données du troisième type de trafic ;
en réponse à la détermination que le premier résultat de détection d'énergie est inférieur au premier seuil, et que le second résultat de détection d'énergie est supérieur ou égal au second seuil, la détermination que la porteuse sans licence est occupée, et l'absence d'envoi des données du troisième type de trafic ; et
en réponse à la détermination que le premier résultat de détection d'énergie est inférieur au premier seuil, et que le second résultat de détection d'énergie est inférieur au second seuil, la détermination que la porteuse sans licence est inactive, et l'envoi des données du troisième type de trafic.

12. Procédé de traitement de trafic selon la revendication 10, dans lequel les sous-bandes sont formées en divisant la bande passante à large bande utilisée par le premier type de trafic et ont chacune une bande passante prédéfinie ; et
les bandes passantes des sous-bandes sont identiques ou différentes ; ou les bandes passantes de certaines des sous-bandes sont identiques, et les bandes passantes de certaines autres sous-bandes sont différentes,
ou dans lequel les sous-bandes sont formées en divisant la bande passante à large bande utilisée par le premier type et ont chacune une bande passante prédéfinie ; et
la bande passante de la sous-bande est égale à une bande passante utilisée par le troisième type de trafic ; ou les bandes passantes d'une ou de plusieurs des sous-bandes sont égales à la bande passante utilisée par le troisième type de trafic.

13. Procédé de traitement de trafic selon la revendication 1, dans lequel en réponse à la détermination qu'une bande passante de système utilisée ou qu'une bande passante de déclaration est la bande passante, et qu'au moins l'un parmi le premier type de trafic et le troisième type de trafic existe,
une exigence de régulation de porteuse sans licence pour la bande passante à large bande est satisfaite ;
ou
la bande passante de système envoyée par le premier type de trafic est la bande passante, et la bande passante de système utilisée par le troisième type de trafic est la bande étroite, dans lequel le premier type de trafic satisfait l'exigence de régulation de porteuse sans licence pour la bande passante à large bande, et le troisième type de trafic satisfait l'exigence de régulation de porteuse sans licence pour une bande passante à bande étroite ;
dans lequel l'exigence de régulation de porteuse sans licence comprend au moins l'une parmi : une exigence de bande passante de canal occupé, une exigence de seuil de détection d'énergie et une exigence de densité spectrale de puissance d'émission maximale ou une exigence de densité spectrale de puissance.

14. Support de stockage lisible par ordinateur stockant des instructions qui, lorsqu'elles sont exécutées par un ordinateur, amènent l'ordinateur à mettre en œuvre le procédé de traitement de trafic selon l'une quelconque des revendications 1 à 13.
